# EUROPÄISCHE PATENTANMELDUNG

(11) **EP 3 785 534 A1**
(43) Veröffentlichungstag der Anmeldung: **03.03.2021**
(21) Anmeldenummer: 19193578.2
(22) Anmeldetag: 26.08.2019
(51) Int. Cl.: A01K 51/00, A01K 55/00

(54) **VORRICHTUNG UND VERFAHREN ZUM BEKÄMPFEN VON BIENENSCHÄDLINGEN**

(71) Anmelder: Andermatt BioVet AG, 6146 Grossdietwil (CH)
(72) Erfinder: Schmidgall, Ralph, CH-6289 Hämikon (CH)
(74) Vertreter: Schmauder & Partner AG Patent- & Markenanwälte VSP

(57) **Zusammenfassung**

Eine Vorrichtung (2) zum Bekämpfen von Bienenschädlingen in einem Bienenstock (4) umfasst einen durch elektrische Heizmittel (10) beheizbaren, im Wesentlichen zylindrischen Tiegel (12) für eine Wirksubstanz, wobei der Tiegel in einem Endabschnitt (14) eines im Bienenstock (4) positionierbaren Basisteils (16) angeordnet ist. Für eine verbesserte und leichtere mobile Vorrichtung wird vorgeschlagen, dass die Heizmittel eine ringförmig um den Tiegel angeordnete Induktionsspule (18) umfassen, welche durch eine im Basisteil befindliche, durch Steuerungsmittel (20) steuerbare Wechselstromquelle (22) speisbar ist, wobei der Tiegel als Induktionstiegel aus einem elektrisch und thermisch leitenden Material ausgebildet ist, das mit der Induktionsspule zusammenwirkt, und wobei der Endabschnitt mit einer Tiegelhalterung (36) ausgestattet ist, welche aus einem thermisch isolierenden Material gebildet ist. Zum Bekämpfen von Bienenschädlingen wird die Vorrichtung im Inneren des zu behandelnden Bienenstocks bereitgestellt, wobei der Induktionstiegel mit einer entsprechend dem Bienenschädling gewählten Wirksubstanz befüllt ist, und es wird ein gesteuerter Beheizungsvorgang durchgeführt, in dessen Verlauf die Wirksubstanz zum Verdampfen bzw. Sublimieren gebracht wird.

## Beschreibung

### Technisches Gebiet

Die Erfindung betrifft eine Vorrichtung bzw. ein Verfahren zum Bekämpfen von Bienenschädlingen, insbesondere von Varroa-Milben.

### Stand der Technik

Der Befall von Bienenvölkern mit der Varroa-Milbe ist ein erhebliches Problem, da bei fehlenden Gegenmassnahmen mit dem Untergang des befallenen Bienenvolkes zu rechnen ist. Da eine Ausrottung der Varroa-Milbe zumindest in naher Zukunft nicht möglich scheint, muss der Milbenbefall unbedingt bekämpft werden.

Es ist bekannt, dass eine effiziente Bekämpfung der Varroa-Milbe durch eine Behandlung mit Oxalsäuredämpfen möglich ist. Entsprechende Geräte sind im Handel bereits erhältlich, siehe beispielsweise VARROX®-Verdampfer von Andermatt BioVet AG, Grossdietwil (CH). Die bekannte Vorrichtung umfasst ein heizbares Vorratspfännchen zur Befüllung mit Oxalsäuredihydrat, das durch den Flugöffnung eines Bienenstockes einführbar ist. Die auf einem Heizwiderstand basierende Wärmezufuhr erfordert eine entsprechend konfigurierte Stromversorgung, die in der Praxis durch eine ausserhalb des Bienenstockes angeordnete Autobatterie übernommen wird.

Eine gattungsgemässe Vorrichtung und ein zugehöriges Verfahren sind zudem in der DE 100 28 573 A1 beschrieben. Zur Stromversorgung wird ebenfalls eine ausserhalb des Bienenstockes befindliche Autobatterie ("12-V Spannungsquelle") oder sogar eine 220V Wechselstromquelle beschrieben.

Nachteilig an den bekannten Vorrichtungen ist es, dass wegen der verwendeten Stromversorgung ein sperriger Aufbau und ein entsprechend hohes Gewicht der Gesamtanordnung resultiert.

### Darstellung der Erfindung

Aufgabe der Erfindung ist es somit, eine verbesserte und leichtere mobile Vorrichtung zum Bekämpfen von Bienenschädlingen in einem Bienenstock bereitzustellen. Eine weitere Aufgabe der Erfindung liegt in der Bereitstellung eines Verfahrens zum Bekämpfen von Bienenschädlingen in einem Bienenstock mittels einer erfindungsgemässen Vorrichtung.

Gelöst werden diese Aufgaben durch die im Anspruch 1 definierte Vorrichtung sowie durch das im Anspruch 11 definierte Verfahren.

Die erfindungsgemässe Vorrichtung zum Bekämpfen von Bienenschädlingen in einem Bienenstock, umfasst einen durch elektrische Heizmittel beheizbaren, im Wesentlichen zylindrischen Tiegel für eine Wirksubstanz, wobei der Tiegel in einem Endabschnitt eines in einen Bienenstock positionierbaren Basisteils angeordnet ist. Die Heizmittel umfassen eine ringförmig um den Tiegel angeordnete Induktionsspule, welche durch eine im Basisteil befindliche, durch Steuerungsmittel steuerbare Wechselstromquelle speisbar ist, wobei der Tiegel als Induktionstiegel aus einem elektrisch und thermisch leitenden Material ausgebildet ist, das mit der Induktionsspule zusammenwirkt, und wobei der Endabschnitt mit einer Tiegelhalterung ausgestattet ist, welche aus einem thermisch isolierenden Material gebildet ist.

Das erfindungsgemässe Verfahren zum Bekämpfen von Bienenschädlingen in einem Bienenstock mittels einer wie oben definierten Vorrichtung umfasst die folgenden Schritte:
- Bereitstellen der Vorrichtung im Inneren des zu behandelnden Bienenstocks, wobei der Induktionstiegel mit einer entsprechend dem Bienenschädling gewählten Wirksubstanz befüllt ist, und
- Durchführen eines gesteuerten Beheizungsvorgangs, in dessen Verlauf die Wirksubstanz zum Verdampfen bzw. Sublimieren gebracht wird.

Prinzipiell ist die Erfindung für den Einsatz gegen jegliche Art von Bienenschädlingen geeignet, die sich mittels einer verdunstbaren oder sublimierbaren Wirksubstanz bekämpfen lassen. Insbesondere ist die Erfindung zur Bekämpfung der Varroa-Milben vorgesehen.

Vorteilhafte Ausführungsformen sind in den abhängigen Ansprüchen definiert.

Eine Erwärmung von nicht zur Beheizung vorgesehenen Teilen der Vorrichtung und/oder Umgebung durch das elektromagnetische Feld der Induktionsspule ist höchst unerwünscht, da sie Beschädigungen hervorrufen könnte und überdies einen unnötigen Stromverbrauch zur Folge hat. Dementsprechend ist es von Vorteil, wenn der Endabschnitt zumindest unterhalb der Induktionsspule mit einer Schirmung versehen ist (Anspruch 2).

Grundsätzlich muss der Induktionstiegel entsprechend seinem Funktionsprinzip aus einem elektrisch und thermisch leitenden Material ausgebildet sein. Vorteilhaft ist es dabei, wenn das Tiegelmaterial zudem magnetisierbar ist. Zur Vermeidung einer unerwünschten Korrosion durch die Wirksubstanz ist der Induktionstiegel gemäss einer vorteilhaften Ausführungsform aus austenitischem oder ferritischem rostfreiem Stahl gebildet (Anspruch 3).

Andererseits muss die Tiegelhalterung zur Vermeidung bzw. Reduktion einer unerwünschten Erwärmung von nicht zu beheizenden Teilen der Vorrichtung und des Bienenstocks eine möglichst geringe thermische Leitfähigkeit aufweisen. Vorzugsweise sollte das Material der Tiegelhalterung eine Wärmeleitfähigkeit 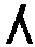 von höchstens 10 Wm⁻¹K⁻¹ aufweisen. Ferner sollte es auch eine geringe elektrische Leitfähigkeit haben, um nicht ihrerseits durch Induktionswirkung beheizt zu werden. Gemäss einer vorteilhaften Ausführungsform ist die Tiegelhalterung aus Keramik gebildet (Anspruch 3). In gewissen Ausführungsformen wird eine Tiegelhalterung aus Zirkonoxid verwendet, das eine Wärmeleitfähigkeit 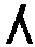 von ca. 2.5 bis 3 Wm⁻¹K⁻¹ aufweist. Bevorzugt ist es zudem, dass die Tiegelhalterung ringförmig ausgebildet ist und der Induktionstiegel einen oberen Aussenkragen aufweist, der auf die ringförmige Tiegelhalterung auflegbar ist (Anspruch 4). Es versteht sich, dass die Komponenten entsprechend dimensioniert sein müssen, d.h. der Durchmesser des oberen Aussenkragens des Induktionstiegels muss im wesentlichen dem Durchmesser der ringförmigen Tiegelhalterung entsprechen, wohingegen die restlichen, unteren Bereiche des Induktionstiegels schlanker sein müssen. Mit einer derartigen Ausgestaltung kann der Induktionstiegel in die Tiegelhalterung eingehängt werden. Dies erleichtert nicht nur das Einsetzen und Entfernen des Induktionstiegels, sondern es erlaubt insbesondere, einen Berührungskontakt des Induktionstiegels mit thermisch nicht isolierenden Bauteilen zu vermeiden.

Der Induktionstiegel ist im Wesentlichen zylinderförmig. Damit ist primär eine zylinderförmige Mantelfläche des Hauptsegments gemeint, welches beim Betrieb von der Induktionsspule umgeben ist. Vorteilhaft ist es zudem, wenn der Induktionstiegel einen konvex geformten Boden aufweist (Anspruch 5). Durch diese Formgebung wird die Aufheizung des Bodenbereichs ermöglicht beziehungsweise verbessert.

Die Abmessungen des Induktionstiegels sind einerseits entsprechend den Abmessungen der zu bedienenden Bienenstöcke bzw. der abzugebenden Wirksubstanzmengen zu wählen. Andererseits soll der Induktionstiegel eine möglichst geringe thermische Masse aufweisen, um die aufzuwendende thermische Energie möglichst gering zu halten. Demnach weist der Induktionstiegel vorteilhafterweise einen Aussendurchmesser von 20 bis 40 mm, eine Wandstärke von 0.5 bis 1.0 mm und eine Aussenhöhe von 9 bis 20 mm auf (Anspruch 6).

Das Prinzip der Induktionsheizung beruht auf der Wirkung einer von Wechselstrom durchflossenen Induktionsspule, zu deren Betrieb eine Wechselstromquelle erforderlich ist. Vorteilhafterweise werden sowohl die Wechselstromquelle als auch die Steuerungsmittel der Vorrichtung durch ein im Basisteil befindliches Batteriepack, vorzugsweise in Form eines wieder aufladbaren Akkumulators, versorgt (Anspruch 7). Der daraus gelieferte Gleichstrom wird über Transistoren und einen Schwingkreis in das für die Induktionsheizung benötigte Wechselstromfeld gewandelt, welches typischerweise eine Frequenz im Bereich von 100 bis 150 kHz aufweist.

Besonders vorteilhaft ist es, wenn die Steuerungsmittel zur Ausführung von mindestens einem vorzugsweise vollautomatischem Beheizungsvorgang programmiert sind (Anspruch 8). Typischerweise sind die Parameter von mindestens einem kompletten Beheizungsvorgang im Gerät, d.h. in einem Speichermedium der Steuerungsmittel hinterlegt. Bevorzugt ist es zudem, wenn Bedienungs- und Anzeigeelemente an einer von der Induktionsspule abgewandten Seite des Basisteils angeordnet sind (Anspruch 9). Insbesondere kann so in einem vollautomatischen Betriebsmodus ein Beheizungsvorgang durch einfachen Knopfdruck, gegebenenfalls nach Eingabe gewisser Voreinstellungen, ausgelöst werden.

Die äussere Form der Vorrichtung richtet sich im Allgemeinen nach Grösse des Bienenstocks und den Abmessungen des verfügbaren Zugangs, insbesondere des vorhandenen Fluglochs. Gemäss einer vorteilhaften Ausführungsform ist der Endabschnitt keilförmig ausgebildet mit einem sich zur Tiegelhalterung hin verjüngenden Querschnitt (Anspruch 10). Insbesondere kann diese Keilform so gewählt werden, dass für Fluglöcher mit einer vorgegebenen Abmessung die Vorrichtung jeweils durch das Flugloch eingeschoben werden kann bis zum Erreichen eines Anschlags. In dieser Position bildet der anschlagende Endabschnitt einen Abschluss des Bienenstocks, was ein unerwünschtes Entweichen der gasförmigen Wirksubstanz aus dem Inneren verhindert. Ansonsten besteht für die Dimensionierung der Vorrichtung eine gewisse Freiheit. Für eine gute Handhabbarkeit und eine Verwendung mit gängigen Bienenstöcken weist die Vorrichtung maximal die folgenden Aussenmasse (Höhe x Breite x Tiefe) auf: 70x90x300 mm.

Gemäss einer vorteilhaften Ausführungsform umfasst der gesteuerte Beheizungsvorgang einen gepulsten Betrieb der Wechselstromquelle, wobei eine dem momentanen Heizungsbedarf entsprechende Pulsfrequenz eingestellt wird (Anspruch 12). Das hochfrequente Wechselstromfeld wird demnach typischerweise mit einer einstellbaren Ein-/Aus-Frequenz im Bereich von < 100 Hz betrieben.

Vorteilhaft ist es zudem, wenn ein mit Wirksubstanz befüllter Induktionstiegel bereitgestellt und der geleerte nach Abschluss des Beheizungsvorgangs aus dem Basisteil entfernt wird (Anspruch 13). Damit ist die Vorrichtung nach Bedienung eines Bienenstocks wieder frei, der Tiegel abgekühlt und der Vorgang kann beim nächsten Bienenstock wiederholt werden. Es versteht sich, dass die Füllmenge an Wirksubstanz im Induktionstiegel an die jeweiligen Erfordernisse, insbesondere an die verwendete Wirksubstanz und an die Grösse des Bienenstocks angepasst wird. Insbesondere ist es unerwünscht, den Induktionstiegel übermässig zu befüllen, da dies nur eine Verschwendung von Heizenergie zur Erwärmung von nicht benötigter Wirksubstanz bedeuten würde.

Bei einer besonders vorteilhaften Ausführungsform umfasst das Bereitstellen der Vorrichtung ein Einschieben des Endabschnitts durch eine schlitzförmige Flugöffnung des Bienenstocks bis der keilförmige Endabschnitt gegen die Flugöffnung anschlägt (Anspruch 14).

Grundsätzlich können für das Verfahren verschiedene Wirksubstanzen verwendet werden. Für die Bekämpfung der Varroa-Milbe wird als Wirksubstanz vorteilhafterweise Oxalsäure-Dihydrat eingesetzt (Anspruch 15).

### Kurze Beschreibung der Zeichnungen

Ausführungsbeispiele der Erfindung werden nachfolgend anhand der Zeichnungen näher beschrieben, dabei zeigen:
- Fig. 1: eine Prinzipdarstellung einer erfindungsgemässen Vorrichtung, in perspektivischer Ansicht, a) gesamthaft, ausserhalb eines grob angedeuteten Bienenstocks, und b) teilweise aufgeschnitten;
- Fig. 2: den Endabschnitt der Vorrichtung von Fig. 1, in einer Querschnittsdarstellung, und
- Fig. 3: eine schematische Darstellung der Hauptkomponenten der Vorrichtung, als Schaltdiagramm.

### Wege zur Ausführung der Erfindung

In den Figuren ist eine Vorrichtung 2 zum Bekämpfen von Bienenschädlingen in einem Bienenstock 4 mit einem Flugloch 6 dargestellt. Im gezeigten Beispiel ist der Bienenstock mit einem als Bodenplatte 8 dienendem Holzbrett ausgestattet, das etwas ausserhalb vom Flugloch vorsteht. Die Vorrichtung umfasst einen durch elektrische Heizmittel 10 beheizbaren, im Wesentlichen zylindrischen Tiegel 12 für eine Wirksubstanz, welcher in einem Endabschnitt 14 eines in den Bienenstock positionierbaren bzw. einführbaren Basisteils 16 angeordnet ist. Der Induktionstiegel ist aus einem elektrisch und thermisch leitenden Material, insbesondere aus rostfreiem Stahl 1.4301 oder 1.4016 gebildet.

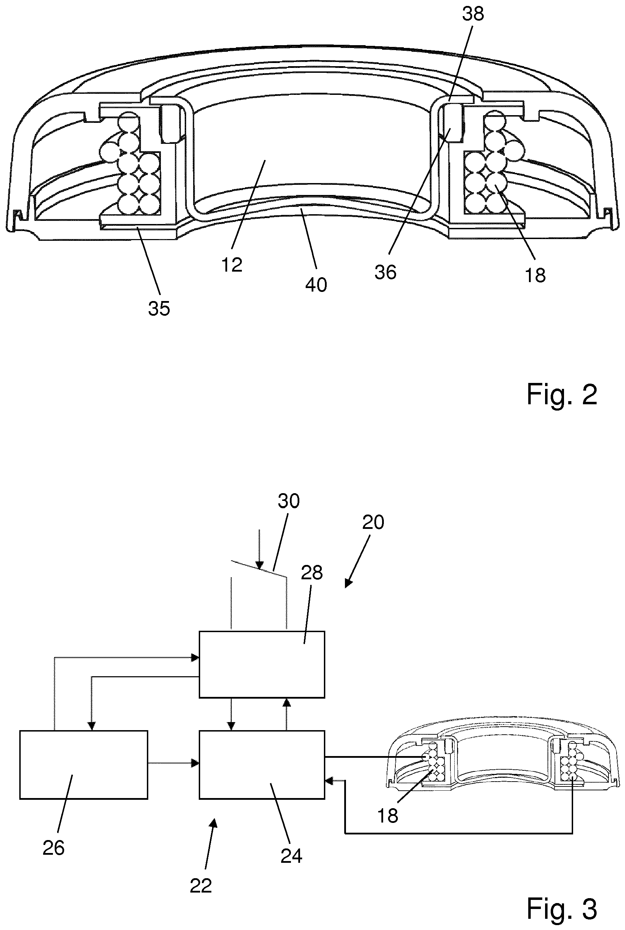

Wie insbesondere aus den Fig. 2 und 3 ersichtlich ist, umfassen die Heizmittel eine ringförmig um den Tiegel angeordnete Induktionsspule 18, welche durch eine im Basisteil befindliche, durch Steuerungsmittel 20 steuerbare Wechselstromquelle 22 speisbar ist. Im gezeigten Beispiel umfasst die Wechselstromquelle eine an die Induktionsspule anschliessbare Leistungselektronik 24, welche von einer zugeordneten Stromversorgungseinheit 26 versorgt wird. Zweckmässigerweise umfasst die Stromversorgungseinheit ein nicht näher dargestelltes Batterie- bzw. Akkupack und dient zusätzlich zur Versorgung einer zu den Steuerungsmitteln gehörenden Steuerelektronik 28. Letztere ist vorzugsweise mit einem Bedienungselement 30, insbesondere einem Start/Stop/Reset-Bedienknopf ausgestattet. Bei gewissen Ausführungsformen sind neben dem Bedienknopf eine Statusanzeige 32 und eine Ladezustandsanzeige 34 vorgesehen, die zweckmässigerweise an einer von der Induktionsspule abgewandten Seite des Basisteils angeordnet sind.

Wie in der Fig. 2 angedeutet, ist der Endabschnitt in einem Bereich unterhalb der Induktionsspule mit einer als Schirmung wirkenden leitenden Schicht 35 versehen. Der Induktionstiegel ist beim Betrieb in einer im Endabschnitt befindlichen Tiegelhalterung 36 gelagert, welche aus einem thermisch isolierenden Material, insbesondere aus Keramik gebildet ist. Im gezeigten Beispiel umfasst die Tiegelhalterung ein ringförmiges Element, auf welchem ein oberer Aussenkragen 38 des Induktionstiegels aufliegt. Der Induktionstiegel weist einen konvexen Bodenteil mit einer nach oben geformten Mittenwulst 40 auf.

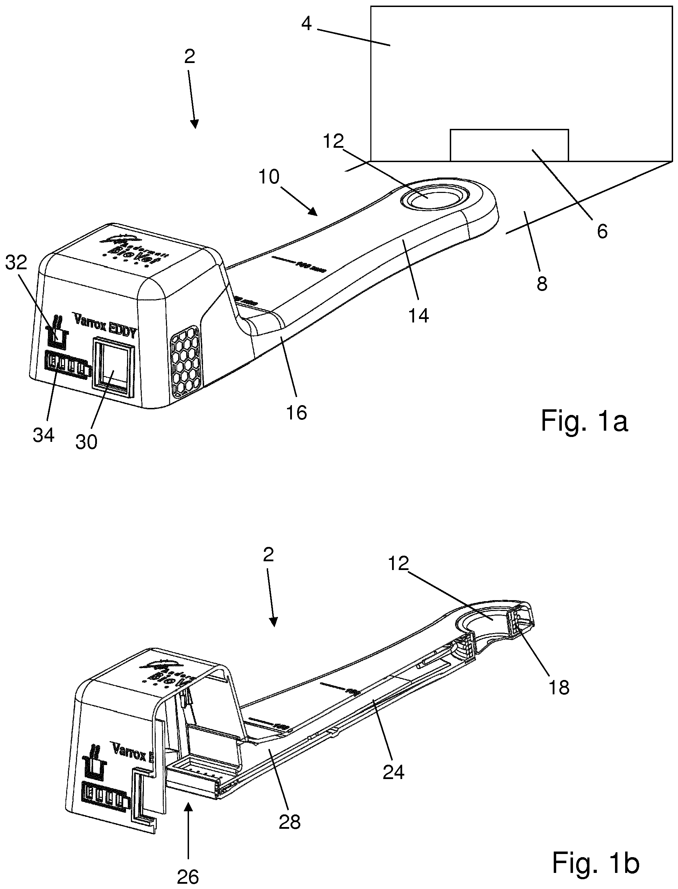

Aus der Fig. 1a ist zudem ersichtlich, dass der Endabschnitt 14 keilförmig ausgebildet ist mit einem sich zur Tiegelhalterung hin verjüngenden Querschnitt. Es versteht sich, dass ein Einführen der Vorrichtung durch das Flugloch 6 des Bienenstocks 4 nur für ein gewisses maximales Aussenmass des Endabschnitts möglich ist. Idealerweise wird beim Einführen ein Anschlag erreicht, bei dem der grösste Teil des Endabschnitts ins Innere des Bienenstocks zu liegen kommt, während die Bedienelemente 30, 32, 34 aussen bleiben.

Bei einem Ausführungsbeispiel wurde die Vorrichtung mit einer kurzfristigen Heizleistung von 30 bis 50 W betrieben. Die Erwärmung fand im ganzen Induktionstiegel, jedoch hauptsächlich in den Wänden statt, welche in Richtung der Feldlinien der Induktionsspule liegen. Ein typischer Heizvorgang zu Erreichen der Schmelztemperatur von Oxalsäure-Dihydrat dauert ca. 30 Sekunden. Sobald die Schmelztemperatur erreicht wurde, bleibt die Temperatur bis zur Verflüssigung der gesamten Wirksubstanz konstant, um im Anschluss während der Verdampfung weiter anzusteigen. Der Gesamtprozess dauert bei einer typischen Füllmenge von 1-2 g Oxalsäure-Dihydrat ungefähr 2 bis 3 Minuten.

Da der Induktionstiegel oben und unten frei ist, wird nach Abschluss des Vorgangs die Abkühlung durch Strahlung an die Umgebung begünstigt. Der Induktionstiegel kann unmittelbar nach der Behandlung ausgeworfen und durch einen vorbereiteten kalten Tiegel ersetzt werden um die Pause zwischen Behandlungszyklen kurz zu halten. Eine Akkuladung erlaubt die Behandlung von 10 Bienenvölkern.

## Patentansprüche

1. Vorrichtung zum Bekämpfen von Bienenschädlingen in einem Bienenstock, wobei die Vorrichtung (2) einen durch elektrische Heizmittel (10) beheizbaren, im Wesentlichen zylindrischen Tiegel (12) für eine Wirksubstanz umfasst, wobei der Tiegel in einem Endabschnitt (14) eines in einen Bienenstock (4) positionierbaren Basisteils (16) angeordnet ist,
**dadurch gekennzeichnet, dass** die Heizmittel eine ringförmig um den Tiegel angeordnete Induktionsspule (18) umfassen, welche durch eine im Basisteil befindliche, durch Steuerungsmittel (20) steuerbare Wechselstromquelle (22) speisbar ist, wobei der Tiegel als Induktionstiegel aus einem elektrisch und thermisch leitenden Material ausgebildet ist, das mit der Induktionsspule zusammenwirkt, und wobei der Endabschnitt mit einer Tiegelhalterung (36) ausgestattet ist, welche aus einem thermisch isolierenden Material gebildet ist.

2. Vorrichtung nach Anspruch 1, wobei der Endabschnitt zumindest unterhalb der Induktionsspule mit einer Schirmung (35) versehen ist.

3. Vorrichtung nach Anspruch 1 oder 2, wobei der Induktionstiegel aus rostfreiem Stahl gebildet ist und/oder die Tiegelhalterung aus Keramik gebildet ist.

4. Vorrichtung nach einem der Ansprüche 1 bis 3, wobei die Tiegelhalterung ringförmig ausgebildet ist und der Induktionstiegel einen oberen Aussenkragen (38) aufweist, der auf die ringförmige Tiegelhalterung auflegbar ist.

5. Vorrichtung nach einem der Ansprüche 1 bis 4, wobei der Induktionstiegel einen konvex geformten Boden (40) aufweist.

6. Vorrichtung nach einem der Ansprüche 1 bis 5, wobei der Induktionstiegel einen Aussendurchmesser von 20 bis 40 mm, eine Wandstärke von 0.5 bis 1.0 mm und eine Aussenhöhe von 9 bis 20 mm aufweist.

7. Vorrichtung nach einem der Ansprüche 1 bis 6, wobei die Wechselstromquelle und die Steuerungsmittel durch ein im Basisteil befindliches, vorzugsweise wieder auf ladbares Batteriepack versorgt werden.

8. Vorrichtung nach einem der Ansprüche 1 bis 7, wobei die Steuerungsmittel zur Ausführung von mindestens einem vorzugsweise vollautomatischem Beheizungsvorgang programmiert sind.

9. Vorrichtung nach einem der Ansprüche 1 bis 8, wobei Bedienungselemente (30) und Anzeigeelemente (32, 34) an einer von der Induktionsspule abgewandten Seite des Basisteils angeordnet sind.

10. Vorrichtung nach einem der Ansprüche 1 bis 9, wobei der Endabschnitt keilförmig ausgebildet ist mit einem sich zur Tiegelhalterung hin verjüngenden Querschnitt.

11. Verfahren zum Bekämpfen von Bienenschädlingen in einem Bienenstock mittels einer Vorrichtung nach einem der vorangehenden Ansprüche, umfassend die folgenden Schritte:
- Bereitstellen der Vorrichtung im Inneren des zu behandelnden Bienenstocks, wobei der Induktionstiegel mit einer entsprechend dem Bienenschädling gewählten Wirksubstanz befüllt ist, und
- Durchführen eines gesteuerten Beheizungsvorgangs, in dessen Verlauf die Wirksubstanz zum Verdampfen bzw. Sublimieren gebracht wird.

12. Verfahren nach Anspruch 11, wobei der gesteuerte Beheizungsvorgang einen gepulsten Betrieb der Wechselstromquelle umfasst, wobei eine dem momentanen Heizungsbedarf entsprechende Pulsfrequenz eingestellt wird.

13. Verfahren nach Anspruch 11 oder 12, wobei ein mit Wirksubstanz befüllter Induktionstiegel bereitgestellt und nach Abschluss des Beheizungsvorgangs aus dem Basisteil entfernt wird.

14. Verfahren nach einem der Ansprüche 11 bis 13 mit einer Vorrichtung nach Anspruch 9, wobei das Bereitstellen der Vorrichtung im Inneren des zu behandelnden Bienenstocks ein Einschieben des Endabschnitts durch ein schlitzförmiges Flugloch des Bienenstocks umfasst bis der keilförmige Endabschnitt gegen das Flugloch anschlägt.

15. Verfahren nach einem der Ansprüche 11 bis 14, wobei die Wirksubstanz Oxalsäure-Dihydrat ist.
